(19) Europäisches Patentamt
European Patent Office
Office européen des brevets

(11) **EP 4 495 320 A1**

(12) **EUROPEAN PATENT APPLICATION**

(43) Date of publication:
**22.01.2025 Bulletin 2025/04**

(21) Application number: **24188924.5**

(22) Date of filing: **16.07.2024**

(51) International Patent Classification (IPC):
*D06P 1/44* [(2006.01)]     *C09D 11/102* [(2014.01)]
*C09D 11/322* [(2014.01)]     *C09D 11/40* [(2014.01)]
*C09D 11/54* [(2014.01)]     *D06P 1/52* [(2006.01)]
*D06P 1/607* [(2006.01)]     *D06P 5/00* [(2006.01)]
*D06P 5/22* [(2006.01)]     *D06P 5/30* [(2006.01)]

(52) Cooperative Patent Classification (CPC):
**D06P 5/30; C09D 11/102; C09D 11/322;
C09D 11/38; C09D 11/40; C09D 11/54; D06P 1/44;
D06P 1/445; D06P 1/5271; D06P 1/5285;
D06P 1/607; D06P 5/002; D06P 5/225**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.07.2023   JP 2023117530**

(71) Applicant: **KONICA MINOLTA, INC.
Tokyo 100-7015 (JP)**

(72) Inventor: **ONAKA, Kenichi
Chiyoda-ku, Tokyo, 100-7015 (JP)**

(74) Representative: **MFG Patentanwälte
Meyer-Wildhagen Meggle-Freund
Gerhard PartG mbB
Amalienstraße 62
80799 München (DE)**

(54) **INK SET AND INKJET RECORDING METHOD**

(57)     Provided is an ink set having satisfactory wet friction fastness, chromogenic property, and texture. The ink set includes: a first treatment liquid containing a water-soluble cationic resin and a first organic solvent; and a second treatment liquid containing a pigment, an anionic resin having a Tg of 0°C or lower, and a second organic solvent. The water-soluble cationic resin has a cation valence of 1.2 mmol/g or more and 6.2 mmol/g or less. The water-soluble polymer has a molecular weight of 500 or more and 4000 or less

Figure

EP 4 495 320 A1

## Description

### Technical Field

The present invention relates to an ink set and an inkjet recording method.

### Background Art

In the related art, exhaust textile printing in which textile printing is performed by immersing a fabric in a bath filled with a dye is known as a textile printing method, but the production efficiency thereof is low because dyeing requires a long time. In recent years, inkjet textile printing in which an image is formed on a fabric by an inkjet method has been widely performed because dyeing can be performed in a short time and the production efficiency thereof is high. In inkjet textile printing, fine droplets of an ink are ejected from an inkjet recording head and allowed to land on a fabric to form an image (see, for example, Patent Literatures (hereinafter, "Patent Literature" will be referred to as "PTL") 1 to 3).

In addition, PTL 1 describes an inkjet recording fabric including an ink absorbing layer on the surface of a fiber base material. On the inkjet recording fabric, an image or the like is formed with a pigment ink and by using an ink-jet printer or the like.

PTL 2 describes an inkjet recording method in which a treatment liquid containing a cationic surfactant and a cationic or nonionic polymer is inkjet-recorded on a fabric to which a thermoplastic resin has been applied, and then inkjet recording is performed with an ink containing an anionic dispersant and a pigment.

In addition, PTL 3 describes an inkjet textile printing method (inkjet recording method) in which a textile-printing ink composition containing a urethane-based resin having a crosslinkable group is attached to a fabric that has been treated with a pretreatment liquid containing a cationic organic compound.

### Citation List

### Patent Literature

PTL 1: Japanese Patent Publication Laid-Open No. H11-293571
PTL 2: Japanese Patent Publication Laid-Open No. 2006-342455
PTL 3: Japanese Patent Publication Laid-Open No. 2018-3184

### Summary of Invention

### Technical Problem

For example, in a case where recording is performed on the inkjet recording fabric described in PTL 1 with the inkjet recording method described in PTLs 2 and 3, there is room for improvement in wet friction fastness, chromogenic property, and texture.

An object of the present invention is to provide an ink set having satisfactory wet friction fastness, chromogenic property, and texture, and an inkjet recording method using the ink set.

### Solution to Problem

An ink set according to an embodiment of the present invention includes: a first treatment liquid containing a water-soluble cationic resin and a first solvent; and a second treatment liquid containing a pigment, an anionic resin having a Tg of 0°C or lower, and a second organic solvent, in which the water-soluble cationic resin has a cation valence of 1.2 mmol/g or more and 6.2 mmol/g or less, and the water-soluble cationic resin has a molecular weight of 500 or more and 4000 or less.

An inkjet recording method according to an embodiment of the present invention is an inkjet recording method in which an image is formed on a fabric by using the ink set described above, and includes: ejecting the first treatment liquid onto the fabric; and ejecting the second treatment liquid onto the fabric.

### Brief Description of Drawings

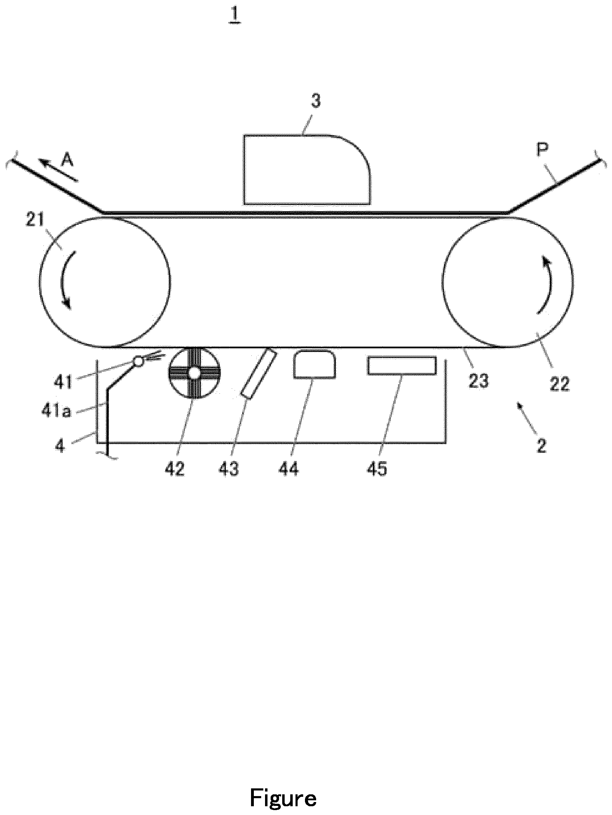

The figure is a schematic diagram illustrating a configuration of a textile printing apparatus.

## Description of Embodiments

Hereinafter, an ink set and an inkjet recording method using the ink set according to an embodiment of the present invention will be described.

[Configuration of Ink Set]

The ink set of the present embodiment includes a first treatment liquid and a second treatment liquid.

(First Treatment Liquid)

The first treatment liquid contains a water-soluble cationic resin and a first organic solvent.

The water-soluble cationic resin reacts or interacts with an anionic resin contained in the second treatment liquid to be aggregated. This makes it easy to fix a pigment and the like in the ink set to a fabric. The water-soluble cationic resin has a cation valence of 1.2 mmol/g or more and 6.2 mmol/g or less, and more preferably 1.2 mmol/g or more and 4.4 mmol/g or less. When the cation valence is within the above range, the cohesive force of the water-soluble cationic resin contained in the first treatment liquid and the anionic resin contained in the second treatment liquid can be made appropriate.

Examples of the water-soluble cationic resin having a cation valence of 1.2 mmol/g or more and 6.2 mmol/g or less include polyamines, diallylamine hydrochloride polymers, diallylamine polymers, methyldiallylamine hydrochloride polymers, methyldiallylamine amide sulfate polymers, methyldiallylamine acetate polymers, diallyldimethylammonium chloride polymers, diallylmethylethylammonium ethylsulfate polymers, amine-epichlorohydrin condensation type polymers, poly-2-hydroxypropyldimethylammonium chloride, dimethylamine-ethylenediamine-epichlorohydrin condensates, and dimethylamine-ammonia-epichlorohydrin condensates.

Examples of a commercially available product of the water-soluble cationic resin include MPT-60 (manufactured by Mitsubishi Pencil Co., Ltd.), UNISENSE KHE100L, UNISENSE FPA101L (both of which are manufactured by SENKA Corporation), PAS-M-1L (manufactured by Nittobo Medical Co., Ltd.), PE-30, PAS-22SA-40, and PAS-J-81L (all of which are manufactured by Yokkaichi Chemical Co., Ltd.).

The cation valence of the water-soluble cationic resin can be determined, for example, by the following method. First, an aqueous dispersion of the water-soluble cationic resin is prepared. Next, toluidine blue is added as an indicator to the aqueous dispersion of the water-soluble cationic resin. Next, titration is performed using a PVSK (potassium polyvinyl sulfate) solution as a titration reagent. The end point of the titration is when the color of the dispersion changes from blue to red. Finally, the cation valence of the water-soluble cationic resin is calculated from the amount of resin (solid content) in the aqueous dispersion and the titration amount of the PVSK solution.

The water-soluble cationic resin has a molecular weight of 500 or more and 4000 or less, and more preferably 600 or more and 3000 or less. In a case where the molecular weight of the water-soluble cationic resin is less than 500, the water-soluble cationic resin transfers from a fabric to cause dye transfer and staining. In a case where the molecular weight of the water-soluble cationic resin is more than 4000, on the other hand, the water-soluble cationic resin is less likely to be fused to a fabric, and the wet friction fastness deteriorates.

The water-soluble cationic resin preferably contains tertiary ammonium or quaternary ammonium from the viewpoint of yellowing and weather resistance of a fabric due to heating. When the water-soluble cationic resin contains only ammonium which is primary or secondary, yellowing may occur in a case where a fabric is heated, depending on the temperature.

Examples of the tertiary ammonium or the quaternary ammonium include alkylamine-epichlorohydrin adduct quaternary salts, alkylamine-ammonia-epichlorohydrin adduct quaternary salts, diallyldimethylammonium chloride polymers, and polymeryldiallylamine hydrochloride polymers. With respect to the tertiary ammonium or the quaternary ammonium, the water-soluble cationic resin preferably contains a quaternary ammonium from the viewpoint of yellowing and weather resistance of a fabric due to heating.

The content of the water-soluble cationic resin in the first treatment liquid is preferably in a range of 1.5 to 18 % by mass, and more preferably in a range of 3.5 to 18 % by mass with respect to the total amount of the first treatment liquid.

As the water-soluble cationic resin, one kind of water-soluble cationic resin may be used or a plurality of kinds of water-soluble cationic resins may be used. In Examples to be described later, one kind of water-soluble cationic resin is used.

The first organic solvent is not particularly limited as long as the water-soluble cationic resin can be appropriately dispersed therein.

Examples of the first organic solvent include monohydric alcohols (e.g., methanol, ethanol, propanol, pentanol, hexanol, cyclohexanol, and benzylalcohol), polyhydric alcohols (e.g., ethyleneglycol, diethyleneglycol, triethyleneglycol, tetraethyleneglycol, polyethyleneglycol, propyleneglycol, dipropyleneglycol, tripropyleneglycol, polypropyleneglycol, glycerine, butyleneglycol, hexanediol, pentanediol, hexanetriol, thiodiglycol, 1,2-butanediol, 1,3-butanediol, 1,2-pentanediol, 1,2-hexanediol, 1,6-hexanediol, 1,2-heptanediol, and trimethylolpropane), polyhydric alcohol ethers (e.g., ethyleneglycol monomethylether, ethyleneglycol monoethylether, ethyleneglycol monobutylether, ethyleneglycol monophenylether, diethyleneglycol monomethylether, diethyleneglycol monoethylether, diethyleneglycol monobutylether, diethyleneglycol dimethylether, propyleneglycol monomethylether, propyleneglycol monoethylether, triethyleneglycol monomethylether, tetraethyleneglycol monomethylether, and tripropyleneglycol monoethylether), amines (e.g., ethanol amine, N-ethyldiethanolamine, morpholine, N-ethylmorpholine, ethylene diamine, diethylene diamine, and triethylene tetramine), amides (e.g., formaldehyde, N,N-dimethylformamide, and N,N-dimethylacetamide), heterocycles (e.g., 2-pyrrolidone, N-methyl-2-pyrrolidone, N-cyclohexyl-2-pyrrolidone, 2-oxazolidone, 1,3-dimethyl-2-imidazolidine), sulfoxides (e.g., dimethylsulfoxide), and sulfones (e.g., sulfolane).

The first organic solvent preferably contains a glycol-based or diol-based solvent having a boiling point of 200°C or higher Thus, even when the first treatment liquid strikes through a fabric, it is unlikely to dry on a conveyance belt, and thus, the belt cleaning performance is unlikely to deteriorate.

Examples of the glycol-based or diol-based solvents having a boiling point of 200°C or higher include 1,3-butanediol (boiling point: 208°C), 1,6-hexanediol (boiling point: 223°C), polypropylene glycol, glycerin (boiling point: 290°C), and trimethylolpropane (boiling point: 295°C).

As the first organic solvent, one kind of first organic solvent may be used or a plurality of kinds of first organic solvents may be used. In Examples to be described later, a plurality of kinds of first organic solvents are used.

(Other Components)

The first treatment liquid may further contain other components in addition to those described above, if necessary, within a range that does not impair the effect of the present invention. Examples of the other components include water, a surfactant, a preservative, and a pH adjuster.

Examples of the water include ion-exchanged water, distilled water, and pure water.

Examples of the surfactant include an anionic surfactant, a cationic surfactant, a nonionic surfactant, and an amphoteric surfactant.

Examples of the preservative include aromatic halogen compounds (e.g., Preventol CMK), methylene dithiocyanate, halogen-containing nitrogen-sulfur compounds, and 1,2-benzisothiazolin-3-one (e.g., PROXEL GXL).

(Second Treatment Liquid)

The second treatment liquid contains a pigment, an anionic resin having a Tg of 0°C or lower, and a second organic solvent.

The pigment may be an organic pigment or an inorganic pigment such as titanium oxide. Generally, the pigment is anionic. As the pigment, one kind of pigment may be used alone or a plurality of kinds of pigments may be used in combination. In Examples to be described later, one kind of pigment is used alone.

Examples of the organic pigment include azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, and diketopyrrolopyrrole pigments.

Examples of the organic pigment for magenta or red include C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, and C. I. Pigment Violet 19.

Examples of the organic pigment for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 15:3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155.

Examples of the organic pigment for green or cyan include C. I. Pigment Blue 15, C. I. Pigment Blue 15:2, C. I. Pigment Blue 15:3, C. I. Pigment Blue 16, C. I. Pigment Blue 60, and C. I. Pigment Green 7.

Examples of the organic pigment for black include C. I. Pigment Black 1, C. I. Pigment Black 6, and C. I. Pigment Black 7.

Titanium oxide is preferably rutile-type titanium oxide from the viewpoint of titanium oxide having a high refractive index and high concealability. Examples of a commercially available product of titanium oxide include the TR series manufactured by Fuji Titanium Industry Co., Ltd., the JR series manufactured by Tayca Corporation, and TIPAQUE manufactured by Ishihara Sangyo Kaisha, Ltd.

The pigment may be a self-dispersible pigment. The self-dispersible pigment is obtained by modifying the surface of a pigment particle with a group having a hydrophilic group, and has a pigment particle and a group having hydrophilicity bonded to the surface of the pigment particle.

Examples of the hydrophilic group include a carboxy group, a sulfonic acid group, and a phosphorus-containing group. Examples of the phosphorus-containing group include a phosphoric acid group, a phosphonic acid group, a phosphinic acid group, a phosphite group, and a phosphate group.

Examples of a commercially available product of the self-dispersible pigment include Cab-O-Jet (registered trademark) 200K, 250C, 260M, and 270V (sulfonic acid group-containing self-dispersible pigments), Cab-O-Jet (registered trademark) 300K (carboxylic acid group-containing self-dispersible pigment), Cab-O-Jet (registered trademark) 400K, 450C, 465M, 470V, and 480V (phosphoric acid group-containing self-dispersible pigments) manufactured by Cabot Corporation.

The content of the pigment in the second treatment liquid is preferably in a range of 1 to 10% by mass, and more preferably in a range of 1 to 5% by mass with respect to the total amount of the second treatment liquid.

The anionic resin having a glass transition temperature Tg of 0°C or lower functions as a binder for the pigment. When the second treatment liquid contains an anionic resin, the fixability of the pigment can be improved. The glass transition temperature Tg is preferably -80°C or higher. In addition, when the Tg is 0°C or lower, an aggregate is unlikely to become hard, and thus, the belt cleaning performance is improved.

The glass transition temperature Tg can be measured using a differential scanning calorimeter (DSC). Specifically, the glass transition temperature Tg can be read from an endothermic peak when the temperature is increased under the condition of a temperature increase rate of 10°C/min in a temperature range of -100 to 200°C by using the DSC.

Examples of the anionic resin include polyester, polyurethane, polyacrylic, and polymethacrylic having an acidic group such as a carboxy group, a sulfonyl group, or a phosphorus-containing group (a phosphoric acid group or a phosphonic acid group).

Examples of a commercially available product of the anionic resin include the Acryset EMN series manufactured by Nippon Shokubai Co., Ltd., the NeoCryl series manufactured by Kusumoto Chemicals, Ltd., the Joncryl series manufactured by BASF SE, the Takelac series manufactured by Mitsui Chemicals, Inc., the HUX series manufactured by ADEKA Corporation, the Evafanol series manufactured by Nicca Chemical Co., Ltd, and the Superflex series manufactured by DKS Co., Ltd.

The anion valence is preferably within a range of 10 to 60 mgKOH/g. In a case where the anion valence is less than 10 mgKOH/g, the dispersibility of the resin in an aqueous medium may decrease. In a case where the acid value is more than 60 mgKOH/g, on the other hand, rapid aggregation may occur with respect to the cationic resin, and thus, the chromogenic property may deteriorate.

As the anionic resin, one kind of anionic resin may be used alone or a plurality of kinds of anionic resins may be used in combination. In Examples to be described later, one kind of anionic resin is used alone.

The content of the anionic resin (solid content) is preferably within a range of 5 to 15% by mass with respect to the total amount of the second treatment liquid. When the content of the anionic resin is 5% by mass or more, the fixability of the pigment can be further improved. When the content of the anionic resin is 15% by mass or less, the amount of aggregates attached to a conveyance belt does not become excessively large, and the deterioration of the belt cleaning property can be suppressed.

As the second organic solvent, the same organic solvent as the first organic solvent may be used. The content of the organic solvent in the second treatment liquid is preferably within a range of 20 to 50% by mass with respect to the total amount of the second treatment liquid.

(Other Components)

The second treatment liquid may further contain other components in addition to those described above, as necessary, within a range that does not impair the effect of the present invention. Examples of the other components include water, a surfactant, a preservative, and a pH adjuster in the same manner as the first treatment liquid.

The ratio of the water-soluble cationic resin to the total amount of the pigment and the anionic resin is within a range of 1:0.8 to 1:16, and preferably within a range of 1:1.1 to 1:9.7. When the ratio of the water-soluble cationic resin to the total amount of the pigment and the anionic resin is within the above range, the chromogenic property and the texture can be improved.

The total amount of cations per area of a fabric in the water-soluble cationic resin in the first treatment liquid and the second treatment liquid is preferably 0.07 mmol/m$^2$ or more and 0.43 mmol/m$^2$ or less. When the total amount of cations is within the above range, the chromogenic property and the texture can be improved.

(Fabric)

The fabric is not particularly limited. Examples of the fabric include natural fibers (including natural cellulose fibers, hemp, wool, and silk), synthetic cellulose fibers (including regenerated cellulose fibers such as rayon, and semi-synthetic cellulose fibers such as acetate), vinylon fibers, nylon fibers, acrylic fibers, polyurethane fibers, and polyester fibers.

The fabric may be any form of the above-described fibers, such as a woven fabric, a nonwoven fabric, and a knitted fabric. Further, the fabric may be a blended woven fabric or a blended nonwoven fabric of two or more kinds of fibers.

(Inkjet Recording Method)

The inkjet recording method of the present invention is an inkjet recording method in which an image is formed on a fabric by using the ink set described above, and includes: ejecting a first treatment liquid onto a fabric; and ejecting a second treatment liquid onto the fabric. That is, in the inkjet recording method of the present invention, the first treatment liquid and the second treatment liquid are continuously applied on a fabric. The application of the first treatment liquid and the second treatment liquid is performed while a fabric is carried on a conveyance belt. As the conveyance belt, a conventional conveyance belt known in the art such as an adhesive conveyance belt can be used.

Here, the term "continuously apply" means that a step such as drying is not included between the applications of the first treatment liquid and the second treatment liquid to the same place. Note that, some of volatile components of the first treatment liquid are allowed to volatilize by natural drying before the application of the second treatment liquid.

In the present invention, by continuously applying the first treatment liquid and the second treatment liquid on a fabric, the first treatment liquid and the second treatment liquid are applied in a wet-on-wet manner, and thus, the texture of the fabric is less likely to be impaired. The reason is that, in the case of wet-on-wet, the degree of contact between components of each treatment liquid is high, and thus, the components are likely to be aggregated before penetrating into yarns constituting the fabric. Since the components are aggregated before penetrating into the yarns, the fibers constituting the yarns are not bonded to each other, and thus, the deterioration of the texture is suppressed.

The order of the applications of the first treatment liquid and the second treatment liquid is not particularly limited. From the viewpoint that the water-soluble cationic resin contained in the first treatment liquid functions as an ink-receiving layer, the first treatment liquid is preferably applied first. The applications of the first treatment liquid and the second treatment liquid may be simultaneous.

The application method of the first treatment liquid and the application method of the second treatment liquid are not particularly limited. The application method of the first treatment liquid and the application method of the second treatment liquid may be the same method or different. Examples of the application methods include a spray method, a mangle method (a pad method or a dipping method), a coating method, and an inkjet method. The application method of the first treatment liquid and the application method of the second treatment liquid are preferably an inkjet method in a case where highly accurate printing is performed.

The application amount of the first treatment liquid is not particularly limited and is adjusted according to the content of the water-soluble cationic resin in the first treatment liquid, the application amount of the second treatment liquid, the type of the fabric, and/or the like. From the viewpoint of reducing aggregates adhering to the conveyance belt, the application amount of the first treatment liquid is preferably smaller than the water retention amount of the fabric in order to suppress strike-through of the first treatment liquid through the fabric.

The application amount of the second treatment liquid is not particularly limited, and may be adjusted according to the content of the pigment in the second treatment liquid, the density of an image to be printed, the type of the fabric, and/or the like. From the viewpoint of reducing aggregates adhering to the conveyance belt, the application amount of the second treatment liquid is preferably smaller than the water retention amount of the fabric in order to suppress the strike-through of the second treatment liquid through the fabric.

The inkjet recording method of the present invention preferably includes drying a fabric after applying the first treatment liquid and the second treatment liquid. In the drying, the first treatment liquid and the second treatment liquid applied to the fabric are fixed to the fabric.

The drying method is not particularly limited, and may be a method using a heater, a hot-air dryer, a heating roller, and/or the like. Inter alia, it is preferable to heat and dry both side of a fabric by using a hot-air dryer and a heater.

The drying temperature is not particularly limited, but is preferably 110°C or higher, and more preferably in a range of 130 to 180°C, from the viewpoint of sufficiently removing the solvents contained in the applied treatment liquids. The drying time depends on the drying temperature, but is, for example, in a range of 0.5 to 10 minutes.

(Configuration of Inkjet Recording Apparatus)

Next, an inkjet recording apparatus (textile printing apparatus) used in the inkjet recording method of the present embodiment will be described.

The figure is a schematic diagram illustrating a configuration of inkjet recording apparatus (textile printing apparatus) 1.

As illustrated in the figure, inkjet recording apparatus (textile printing apparatus) 1 includes belt conveyance unit 2, image forming unit 3, and conveyance belt cleaning unit 4.

In belt conveyance unit 2, conveyance belt 23 having an endless shape and a predetermined width is stretched over driving roller 21 and driven roller 22 that are disposed in parallel at a predetermined interval. A surface (upper surface) of conveyance belt 23 stretched between driving roller 21 and driven roller 22 is configured to be a placement surface on which fabric P is placed in close contact therewith. An adhesive called a ground coating may be applied to the surface of conveyance belt 23 in order to bring fabric P during conveyance into close contact with the surface. Driving roller 21 is rotationally driven by a sub-scanning motor (not illustrated).

In belt conveyance unit 2, driving roller 21 rotates at a predetermined speed in the counterclockwise direction (see the arrow) in the figure by the rotational driving of the sub-scanning motor. Thus, conveyance belt 23 stretched between driving roller 21 and driven roller 22 rotates and moves. By this operation, fabric P placed on the surface of conveyance belt 23 is conveyed in the direction of arrow A, which is the sub-scanning direction, in the figure.

Fabric P may have a sheet shape cut to a predetermined size, or may have a long shape continuously fed from an original roll wound in a roll shape.

In the case of the ink-jet system, image forming unit 3 is constituted by inkjet heads disposed at a predetermined interval above the surface of conveyance belt 23, on which fabric P is placed. Each inkjet head ejects the treatment liquids onto fabric P, which is conveyed by conveyance belt 23, from a large number of nozzles provided on the lower surface of each inkjet head, according to the inkjet recording method described above. Thus, a desired image is formed on fabric P.

Image forming unit 3 may be of a shuttle type which is mounted on a carriage and moves back and forth in the main scanning direction orthogonal to the conveyance direction of fabric P which is intermittently conveyed. In this case, conveyance belt 23 is controlled by the rotational driving of driving roller 21 so as to perform an intermittent operation in which a standby state and a driven state are repeated at the time of image formation. Alternatively, image forming unit 3 may be of a line type that is fixedly stretched over the width direction of conveyance belt 23 and forms an image by ejecting ink droplets onto fabric P which is continuously conveyed. In this case, conveyance belt 23 is controlled by the rotational driving of driving roller 21 so as to continuously perform a movement (rotation) operation at the time of image formation.

Conveyance belt cleaning unit 4 is disposed below belt conveyance unit 2. Conveyance belt cleaning unit 4 is provided with a plurality of cleaning means or the like in order along the movement direction of conveyance belt 23.

Conveyance belt cleaning unit 4 illustrated in the figure includes water-sprinkling pipe 41, brush roller 42, cleaning blade 43, cleaning sponge 44, and heating unit 45.

Water-sprinkling pipe 41 is stretched over the entire width of conveyance belt 23. In water-sprinkling pipe 41, a large number of nozzles (not illustrated) are arranged along the length direction in a portion facing the surface of conveyance belt 23. A cleaning liquid is supplied to water-sprinkling pipe 41 via water-sprinkling tube 41a by the driving of a water-sprinkling pump (not illustrated). Water-sprinkling pipe 41 sprays the supplied cleaning liquid from the nozzles toward the surface of conveyance belt 23, thereby cleaning foreign matter adhering to the surface of conveyance belt 23.

Brush roller 42 is formed in a roller shape by planting a plurality of brush bundles, each of which is formed by bundling brush bristles, around a rotating shaft stretched over the entire width of conveyance belt 23. The leading ends of the brush bundles are always in contact with the surface of conveyance belt 23 on the downstream side of the water-sprinkling position by water-sprinkling pipe 41 in the rotation direction of conveyance belt 23. Brush roller 42 rotatably comes into contact with the surface of conveyance belt 23 and removes foreign matter such as an aggregate remaining on the surface of conveyance belt 23. Specifically, brush roller 42 rotates at a predetermined speed in the same direction as the rotation direction of driving roller 21, based on the power of a brush driving unit (not illustrated). Thus, brush roller 42 moves in the direction opposite to the movement direction of conveyance belt 23, and slides with the surface of conveyance belt 23 with the leading ends of the brush bundles. With this operation, brush roller 42 removes foreign matter cleaned by the sprinkling of the cleaning liquid by water-sprinkling pipe 41 on the upstream side in the movement direction of conveyance belt 23.

A cleaning tank (not illustrated) for storing a cleaning liquid may be disposed below brush roller 42. In this case, a lower part of brush roller 42 is partially immersed in the cleaning liquid, and scoops up the cleaning liquid at the time of rotation, thereby enhancing the effect of removing foreign matter. Further, the cleaning liquid in the cleaning tank may be supplied to water-sprinkling pipe 41 via water-sprinkling tube 41a. In this case, the cleaning liquid sprayed and dropped onto the surface of conveyance belt 23 is accommodated in the cleaning tank again and reused.

Cleaning blade 43 is provided on the downstream side of brush roller 42 in the rotation direction of conveyance belt 23. Cleaning blade 43 is formed in a flat plate shape by using, for example, an elastic material such as rubber, a PET sheet, a straight-shaped brush, or the like, and is stretched over the entire width of conveyance belt 23. Cleaning blade 43 is configured such that the leading end thereof can abut on or be separated from the surface of conveyance belt 23. Cleaning blade 43 abuts on the surface of conveyance belt 23 and removes foreign matter or a cleaning liquid, which remains on the surface of conveyance belt 23, by scraping off the foreign matter or the cleaning liquid.

Cleaning sponge 44 is a water-absorbing porous body, such as a sponge, and is stretched over the entire width of conveyance belt 23. The surface of cleaning sponge 44 is configured to be capable of abutting on or being separated from the surface of conveyance belt 23 on the downstream side of cleaning blade 43 in the rotation direction of conveyance belt 23. Cleaning sponge 44 abuts on the surface of conveyance belt 23, thereby absorbing and wiping off the cleaning liquid remaining on the surface of conveyance belt 23.

Heating unit 45 is a belt heater and is provided on the downstream side of cleaning sponge 44 and on the upstream side of driven roller 22 in the rotation direction of conveyance belt 23. Heating unit 45 heats and evaporates the cleaning liquid remaining on the surface of conveyance belt 23.

[Example]

Hereinafter, the present invention will be specifically described with reference to Examples, but the present invention is not limited thereto. Note that, in the following Examples, operations were performed at room temperature (25°C) unless otherwise specified. Furthermore, unless otherwise specified, "%"," "ppm", and "part(s)" mean "% by mass", "ppm by mass", and "part(s) by mass", respectively.

[Preparation of First Treatment Liquid and Second Treatment Liquid]

The components listed in Tables 1 and 2 were mixed to prepare each of the first treatment liquids (1-1 to 1-14) and the second treatment liquids (2-1 to 2-5).

Details of the respective components are as illustrated in Tables 1 and 2 and below.

As water-soluble cationic resins, MPT-60 (manufactured by Mitsubishi Pencil Co., Ltd.), UNISENSE KHE100L, UNISENSE FPA101L (both of which are manufactured by SENKA Corporation), PAS-M-1L (methyldiallylamine hydrochloride polymer) (manufactured by Nittobo Medical Co., Ltd.), PE-30 (dimethylamine-ethylenediamine-epichlorohydrin copolymer), PAS-22SA-40 (methyldiallylamine amidosulfate polymer), and PAS-J-81L (methyldiallylamine hydrochloride polymer) (both of which are manufactured by Yokkaichi Chemical Co., Ltd.) were used.

As acrylic resins which are anionic resins, EMN-325E and EF-021 (manufactured by Nippon Shokubai Co., Ltd.) were used. As urethane resins which are anionic resins, Superflex 150 and Superflex 470 (both manufactured by DKS Co., Ltd.) and Evafanol HA-207 (manufactured by Nicca Chemical Co., Ltd.) were used.

As a pigment-dispersion, Cab-O-Jet-4637M (manufactured by Cabot Corporation) was used. As an active agent (acetylene glycol-based surfactant), E1010 (manufactured by Nissin Chemical Industry Co., Ltd.) was used. As a preservative, Proxcel GXL(S) (manufactured by Lonza K.K.) was used.

[Table 1]

Table 1

| | Component name | Cation valence [mmol/g] | Molecular weight Mw | First treatment liquid No. | | | | | | | | | | | | | |
|---|---|---|---|---|---|---|---|---|---|---|---|---|---|---|---|---|---|
| | | | | 1-1 | 1-2 | 1-3 | 1-4 | 1-5 | 1-6 | 1-7 | 1-8 | 1-9 | 1-10 | 1-11 | 1-12 | 1-13 | 1-14 |
| Resin | MPT-60 (%) | 5.5 | 730 | 4.0 | - | - | - | - | - | - | - | 6.8 | - | - | - | - | - |
| | UNISENSE KHE100L (%) | 4.4 | 1300 | - | 4.9 | - | - | - | - | - | - | - | 1.5 | - | - | - | - |
| | UNISENSE FPA100L (%) | 1.2 | 1400 | - | - | 18.0 | - | - | - | - | - | - | - | 13.9 | - | - | - |
| | PAS-M-1L (%) | 6.2 | 3700 | - | - | - | 3.5 | - | - | - | - | - | - | - | 69 | - | - |
| | PE-30 (%) | 6.3 | 12000 | - | - | - | - | 3.4 | - | - | - | - | - | - | - | 6.8 | - |
| | PAS-22SA-40 (%) | 4.8 | 15000 | - | - | - | - | - | 4.5 | - | - | - | - | - | - | - | 1.4 |
| | PAS-J-81L (%) | 5.9 | 8000 | - | - | - | - | - | - | 3.7 | - | - | - | - | - | - | - |
| | UNISENSE FPA101L (%) | 1.7 | 5800 | - | - | - | - | - | - | - | 12.7 | - | - | - | - | - | - |
| Solvent | Ethylene glycol (%) | - | | 20.0 | 20.0 | 20.0 | 20.0 | 20.0 | 20.0 | 20.0 | 20.0 | 20.0 | 20.0 | 20.0 | 20.0 | 20.0 | 20.0 |
| | Propylene glycol (%) | - | | 10.0 | 10.0 | 10.0 | 10.0 | 10.0 | 10.0 | 10.0 | 10.0 | 10.0 | 10.0 | 10.0 | 10.0 | 100 | 10.0 |
| Active agent | E1010 (%) | - | | 0.10 | 0.10 | 0.10 | 0.10 | 0.10 | 0.10 | 0.10 | 0.10 | 0.10 | 0.10 | 0.10 | 0.10 | 0.10 | 0.10 |
| Preservative | Proxcel GXL(S) (%) | - | | 0.05 | 0.05 | 0.05 | 0.05 | 0.05 | 0.05 | 0.05 | 0.05 | 0.05 | 0.05 | 0.05 | 0.05 | 0.05 | 0.05 |
| Ion-exchanged water (%) | | - | | 65.9 | 64.9 | 51.9 | 66.4 | 66.4 | 65.4 | 66.2 | 57.1 | 63.0 | 68.3 | 56.0 | 63.0 | 63.1 | 68.5 |
| Total (%) | | | | 100 | 100 | 100 | 100 | 100 | 100 | 100 | 100 | 100 | 100 | 100 | 100 | 100 | 100 |
| Total amount of cations (mmol/m$^2$) per area of fabric in first treatment liquid | | | | 0.216 | 0.216 | 0.216 | 0.216 | 0.216 | 0.216 | 0.216 | 0.216 | 0.37 | 0.07 | 0.17 | 0.43 | 0.43 | 0.07 |

[Table 2]

Table 2

| | Component name | Solid content acid value | Tg [°C] | Second treatment liquid No. | | | | |
|---|---|---|---|---|---|---|---|---|
| | | | | 2-1 | 2-2 | 2-3 | 2-4 | 2-5 |
| Pigment dispersion | Cab-O-Jet-4637M (%) | - | - | 4.5 | 4.5 | 4.5 | 4.5 | 4.5 |
| Resin | EMN-325E (%) | 14 | -50 | 15.0 | - | - | - | - |
| | EF-021 (%) | 15 | -2 | - | 20.0 | - | - | - |
| | Superflex 150 (%) | 15 | 40 | - | - | 15.0 | - | - |
| | Superflex 470 (%) | 10 | -31 | - | - | - | 10.0 | - |
| | Evafanol HA-207 (%) | 25 | -29 | - | - | - | - | 15.0 |
| Solvent | Ethylene glycol (%) | - | | 20 | 20 | 20 | 20 | 20 |
| | Glycerin (%) | - | | 10 | 10 | 10 | 10 | 10 |
| Active agent | E1010 (%) | - | | 0.10 | 0.10 | 0.10 | 0.10 | 0.10 |
| Preservative | Proxcel GXL(S) (%) | - | | 0.05 | 0.05 | 0.05 | 0.05 | 0.05 |
| Water | Ion-exchanged water (%) | - | | 50 | 45 | 50 | 55 | 50 |
| Total (%) | | - | | 100 | 100 | 100 | 100 | 100 |

[Textile-Printed Image Formation]

As a fabric, cotton satin (100% cotton: product name: 60 cotton satin manufactured by Okadaya Co., Ltd.) was prepared.

The prepared first and second treatment liquids were introduced into a simple printing tester in which an inkjet head KM1024i (manufactured by Konica Minolta Inc.) is mounted, and the first and second treatment liquid were continuously applied onto the fabric in this order by an inkjet method and then dried to obtain a textile-printed image-formed product. The ejections of the first and second treatment liquid layer-forming liquids from the inkjet head were performed at the main scanning 540 dpi × and the sub-scanning 720 dpi, respectively. Note that, the dpi represents the number of ink droplets (dots) per 2.54 cm. The ejection frequency was set to 22.4 kHz. Then, drying was performed at 150°C for 3 minutes by a belt conveyance type dryer to obtain a 100% solid textile-printed image-formed product of 200 mm × 200 mm. Note that, the adhesion amounts of the first and second treatment liquids were 15 g/m$^2$ and 30 g/m$^2$, respectively. These adhesion amounts were obtained from the ejection amounts of the treatment liquids.

[Evaluation of Chromogenic Property]

The surface reflectance of the printed solid image was measured with a spectrophotometer CM-25d (manufactured by Konica Minolta Inc.), and a K/S value at 540 nm was calculated. The K/S value is an index of surface color density defined by the following equation:

$$\text{Kubelka-Munk equation: } K/S = (1-R)^2/2R$$

(K: Absorption coefficient of light, S: Scattering coefficient of light, R: Surface reflectance).

A larger K/S value means a higher color density, and a smaller K/S value means a lower color density.

Based on the calculated K/S value, the chromogenic property was evaluated according to the following criteria.

In the following criteria, A and B were regarded as being in an acceptable range.

Evaluation criteria

A: The K/S value was 5.0 or more.
B: The K/S value was 4.0 or more and less than 5.0.
C: The K/S value was 3.0 or more and less than 4.0.
D: The K/S value was less than 3.0

[Evaluation of Wet Friction Fastness]

The wet friction fastness of the image formed on the fabric was evaluated with a clock meter (friction tester type I) in accordance with the wet test of JIS L 0849.

Specifically, a white cotton fabric for friction was rubbed back and forth 100 times with a load of a 200 g against a 100 mm × 100 mm region of the formed image to apply friction thereto. As the white cotton fabric for friction, a white cotton fabric wetted with water to be in a wet state of about 100% was used. After the friction was applied, the color transfer to the white cotton fabric for friction was observed, and the wet friction fastness was evaluated according to the following criteria. In the following criteria, A and B were regarded as being in an acceptable range.

Evaluation criteria

A: There was almost no color transfer.
B: There was color transfer within the acceptable range.
C: There was color transfer beyond the acceptable range.
D: There was significant color transfer beyond the acceptable range.

[Evaluation of Texture]

The texture of the fabric after textile printing was sensuously evaluated by five persons. The texture of the fabric was evaluated according to the following criteria based on the number of persons who felt that the fabric after textile printing became harder than the fabric before textile printing. According to the following criteria, A and B were regarded as being in an acceptable range.

Evaluation criteria

A: The number of persons who felt that the fabric after textile printing became harder was 0 to 1.
B: The number of persons who felt that the fabric after textile printing became harder was 2 to 3.
C: The number of persons who felt that the fabric after textile printing became harder was 4.
D: The number of persons who felt that the fabric after textile printing was harder was 5.

Table 3 illustrates the used first and second treatment liquids, and the evaluation results of chromogenic property, wet friction fastness, and texture.

[Table 3]

Table 3

| | First treatment liquid | | | | Second treatment liquid | | Evaluation | | |
|---|---|---|---|---|---|---|---|---|---|
| | Prescription | Cation Valence (mmol/g) | Molecular weight of resin [MW] | Total cation equivalent (mmol/m²) | Prescription | Glass transition temperature (°C) | Chromogenic property | Wet faction robustness | Texture |
| Ex 1 | 1-1 | 5.5 | 730 | 3.24 | 2-1 | -50 | A | A | A |
| Ex 2 | 1-2 | 44 | 1300 | 3.24 | 2-5 | -29 | A | A | A |
| Ex. 3 | 1-3 | 1.2 | 1400 | 3.24 | 2-1 | -50 | A | A | A |
| Ex. 4 | 1-4 | 6.2 | 3700 | 3.24 | 2-4 | -31 | B | B | A |
| Ex 5 | 1-9 | 5.5 | 730 | 5_60 | 2-2 | -2 | A | B | B |
| Ex 6 | 1-10 | 44 | 1300 | 1.00 | 2-4 | -31 | B | B | B |
| Ex 7 | 1-11 | 1.2 | 1400 | 2.50 | 2-1 | -50 | B | B | B |
| Ex 8 | 1-12 | 62 | 3700 | 6.40 | 2-1 | -50 | B | B | B |
| Comp Ex. 1 | 1-1 | 5.5 | 730 | 3.24 | 2-3 | 40 | B | D | D |
| Comp Ex. 2 | 1-5 | 63 | 12000 | 3.24 | 2-3 | 40 | C | D | D |
| Comp Ex. 3 | 1-6 | 48 | 15000 | 3.24 | 2-1 | -50 | B | D | B |
| Comp. Ex. 4 | 1-7 | 5.9 | 8000 | 3.24 | 2-1 | -50 | B | D | B |
| Comp. Ex. 5 | 1-8 | 1.7 | 5800 | 3.24 | 2-1 | -50 | A | C | B |
| Comp. Ex. 6 | 1-13 | 6.3 | 12000 | 6.40 | 2-2 | -2 | C | D | C |
| Comp. Ex. 7 | 1-14 | 48 | 15000 | 1.00 | 2-1 | -50 | B | D | D |

As illustrated in Table 3, the chromogenic property, the wet friction fastness, and the texture were satisfactory in Examples 1 to 8 in which the cation valence of the water-soluble cationic resin was 1.2 mmol/g or more and 6.2 mmol/g or less and the molecular weight of the water-soluble cationic resin was 500 or more and 4000 or less. Furthermore, the chromogenic property, the wet friction fastness, and the texture were more satisfactory in Examples 1 to 3 in which the cation valence of the water-soluble cationic resin was 1.2 mmol/g or more and 5.5 mmol/g or less, the molecular weight of the water-soluble cationic resin was 500 or more and 1500 or less, and the glass transition temperature [Tg] of the anionic resin was -29°C or lower.

In Comparative Examples 1 and 2 in which an anionic resin having a glass transition temperature of higher than 0 °C was contained, on the other hand, the texture was unsatisfactory. The reason is considered that the fixability of the pigment decreased. In addition, Comparative Examples 2 to 7 in which the molecular weight of the water-soluble cationic resin was more than 4000 were unsatisfactory in wet friction fastness. The reason is considered that the water-soluble cationic resin became less likely to be fused to the fabric. The chromogenic property was unsatisfactory in Comparative Examples 6 and 7 in which the cation valence of the water-soluble cationic resin was not within the range of 1.2 mmol/g or more and 6.2 mmol/g or less. The reason is considered that the water-soluble cationic resin contained in the first treatment liquid and the anionic resin contained in the second treatment liquid were not appropriately aggregated.

(Effect)

As described above, it can be seen according to the present invention that when the glass transition temperature of the anionic resin is 0°C or lower, the cation valence of the water-soluble cationic resin is 1.2 mmol/g or more and 6.2 mmol/g or less, and the molecular weight of the water-soluble cationic resin is 500 or more and 4000 or less, the chromogenic property, the wet friction fastness and the texture are satisfactory.

**Industrial Applicability**

With the ink set and the inkjet recording method according to the present invention, an ink set and an inkjet recording method are provided which are excellent in various properties required in image formation, and which are capable of forming a satisfactory image.

**Reference Signs List**

    1 Textile printing apparatus
    2 Belt conveyance unit
    3 Image forming unit
    4 Conveyance belt cleaning unit
    21 Driving roller
    22 Driven roller
    23 Conveyance belt
    41 Water-sprinkling pipe
    41a Water-sprinkling tube
    42 Brush roller
    43 Cleaning blade
    44 Cleaning sponge
    45 Heating unit

**Claims**

1.    An ink set, comprising:

    a first treatment liquid containing a water-soluble cationic resin and a first organic solvent; and
    a second treatment liquid containing a pigment, an anionic resin, and a second organic solvent, the anionic resin having a glass transition temperature of 0°C or lower, wherein:

        the water-soluble cationic resin has a cation valence of 1.2 mmol/g or more and 6.2 mmol/g or less, and
        the water-soluble cationic resin has a molecular weight of 500 or more and 4000 or less.

2. The ink set according to claim 1, wherein the water-soluble cationic resin contains tertiary ammonium or quaternary ammonium.

3. The ink set according to claim 1 or 2, wherein both the first organic solvent and the second organic solvent contain a glycol-based or diol-based solvent having a boiling point of 200°C or higher

4. The ink set according to any one of claims 1 to 3, wherein the anionic resin includes a urethane resin.

5. The ink set according to any one of claims 1 to 4, wherein a ratio of the water-soluble cationic resin to a total amount of the pigment and the anionic resin is within a range of 1:0.8 to 1:16.

6. An inkjet recording method in which an image is formed on a fabric by using the ink set according to claim 1, the inkjet recording method comprising:

   ejecting the first treatment liquid on a fabric; and
   ejecting the second treatment liquid on the fabric.

7. The inkjet recording method according to claim 6, wherein a total amount of cations per area of the fabric in the water-soluble cationic resin in the first treatment liquid and the second treatment liquid is 0.07 mmol/m$^2$ or more and 0.43 mmol/m$^2$ or less.

<u>1</u>

Figure

Europäisches
Patentamt

European
Patent Office

Office européen
des brevets

# EUROPEAN SEARCH REPORT

Application Number

EP 24 18 8924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/186395 A1 (NIPPON KAYAKU KK [JP]) 9 September 2022 (2022-09-09) * paragraph [0001] - paragraph [0145]; example 22 * ----- | 1-7 | INV. D06P1/44 C09D11/102 C09D11/322 C09D11/40 C09D11/54 D06P1/52 D06P1/607 D06P5/00 D06P5/22 D06P5/30 |
| T | WO 2022/186396 A1 (NIPPON KAYAKU KK [JP]) 9 September 2022 (2022-09-09) * paragraph [0215] * ----- | | |

| | |
|---|---|
| | TECHNICAL FIELDS SEARCHED (IPC) |
| | D06P C09D |

The present search report has been drawn up for all claims

| Place of search | Date of completion of the search | Examiner |
|---|---|---|
| The Hague | 25 November 2024 | Massella, Daniele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 8924

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| WO 2022186395 A1 | 09-09-2022 | CN 116940643 A | 24-10-2023 |
| | | EP 4303006 A1 | 10-01-2024 |
| | | JP WO2022186395 A1 | 09-09-2022 |
| | | US 2024150605 A1 | 09-05-2024 |
| | | WO 2022186395 A1 | 09-09-2022 |
| WO 2022186396 A1 | 09-09-2022 | EP 4303007 A1 | 10-01-2024 |
| | | JP WO2022186396 A1 | 09-09-2022 |
| | | US 2024150604 A1 | 09-05-2024 |
| | | WO 2022186396 A1 | 09-09-2022 |

EPO FORM P0459

For more details about this annex : see Official Journal of the European Patent Office, No. 12/82

**EP 4 495 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11293571 A
- JP 2006342455 A
- JP 2018003184 A